# EUROPEAN PATENT APPLICATION

(11) **EP 3 082 355 A1**
(43) Date of publication of application: **19.10.2016**
(21) Application number: 15305585.0
(22) Date of filing: 17.04.2015
(51) Int. Cl.: H04W 12/08, H04W 12/04, H04W 8/20

(54) **A METHOD FOR CONTROLLING REMOTELY THE PERMISSIONS AND RIGHTS OF A TARGET SECURE ELEMENT**

(71) Applicant: GEMALTO SA, 92190 Meudon (FR)
(72) Inventor: Rhelimi, Alain, 92190 Meudon (FR); Merrien, Lionel, 92190 Meudon (FR)
(74) Representative: Delaval, Guillaume Laurent

(57) **Abstract**

This invention relates to a method for controlling remotely the rights of a target secure element to an execute an operation, said target secure element (400) being configured to load a profile image and to store a first set of at least one parameter indicating if the secure element is locked or unlocked and, in case it is locked, who is the locker of said secure device. The method is operated by an image delivery server (403), said method and comprises the following steps: receiving a second set (407) of at least one parameter and an operation code OP defining a requested operation to be performed by the target secure element (400), receiving a profile image (405) to be transmitted to the secure element (400); generating a security scheme descriptor (SSD) file adapted to bind the profile image with the target secure element and further comprising the second set of at least one parameter and the operation code OP; sending the received image profile and the associated security scheme descriptor (SSD) file to the target secure element (400).

## Description

### TECHNICAL FIELD

The present invention relates to a method for modifying/granting remotely the rights attributed to a target secure element and is applicable to systems implementing embedded or removable secure elements.

### BACKGROUND OF THE INVENTION

With the accelerated growth of the connected devices and considering the constraints and requirements of the device makers, the need has emerged for a Subscription Manager that is adapted to Consumer Electronics such as Smartphones, tablets of other type of connected devices. In a more generic way, the miniaturization of the devices, especially about the wearable devices, lead the OEM device maker to favour the withdrawn of a physical connector accepting a removable Secure Element as a Universal Integrated Circuit Card (UICC). Namely, an embedded Secure Element is the translation of the above requirements where the Secure Element is no longer removable and closely embedded in the OEM device. A eUICC is an embedded SE (eSE) supporting a mobile communication oriented firmware as known as Image/Profile Image (OS and custom files).

A possible solution would be to use a Primary Boot Loader also designated in this description with its acronym PBL. The PBL behaves just like an embedded Secure Element (eSE) logical connector supporting the installation of a full Profile Image on an eSE chip. It enables the full upload of an Image on this dedicated chip that has been properly certified. Such upload is performed in a time short enough to match the requirement of a proper End User experience, while preserving the necessary level of security that has been obtained until now with the smart card technology, bundling strongly the software (mainly the operating system and profile) with the hardware.

The PBL-based model provides several advantages.

Within the Mobile Phone environment, one advantage is that there is no need to standardize a UICC operating system (OS). The Mobile Network Operator (MNO) will continue enjoying the level of flexibility they need in terms of Subscriber Identity Module (SIM) OS features diversity, they will keep control access to their network, avoid serious disruptions for their IT systems, and will benefit from new possible use cases.

Another advantage is that the Original Equipment Manufacturer (OEM) will be able to also use embedded chips, in the cases where the removable card as a SIM card connector becomes an excessive physical constraints (e.g. new connected devices), with the safety and flexibility provided by the fact the entire Profile Image can be uploaded in case of any issue of the embedded software (parameter issue, security weakness, run time difficulty, ...).

Further, the End User will be in control of the choice for connectivity / subscription, with an easier journey for obtaining connectivity on any new device, which will boost usage of both the devices capabilities and the MNO's networks.

Additionally, full remote maintenance is possible as the entire Profile Image (OS included) can be remotely changed. This not only provides a much safer context for the OEM, it also feeds continuous innovation and improvements during the UICC life cycle. MNOs can continue defining their own secure applications and specific OS optimization, without any compromise.

Using this technology allows assuring interoperability and each UICC vendor can continue loading their own images on the deployed chips, in collaboration with the MNOs and OEMs.

MNOs may provide access to their network using a PBL based system solution. Further, the MNO may provide the end users with subsidized device with connectivity services. In that case, the boot loader may be locked in order to avoid the end user to change its subscription by loading a Profile Image different from the one provided by the business owner (the MNO) which has subsidized its device. Therefore, there is a need of a method and related equipments to modify the right attributed to a secure element associated to a device, for example a subsidized device.

### SUMMARY OF THE INVENTION

The proposed invention relates to a method for controlling remotely the rights of a target secure element to an execute an operation, said target secure element being configured to load a profile image and to store a first set of at least one parameter indicating if the secure element is locked or unlocked and, in case it is locked, who is the locker of said secure device, the method being operated by an image delivery server, said method comprising the following steps:
- receiving a second set of at least one parameter and an operation code OP defining a requested operation to be performed by the target secure element, said second set of at least one parameter being adapted for controlling the rights to execute the requested operation by the target secure element depending on the result of a comparison between said first and second sets of parameters;
- receiving a profile image to be transmitted to the secure element;
- generating a security scheme descriptor file adapted to bind the profile image with the target secure element and further comprising the second set of at least one parameter and the operation code OP;
- sending the received image profile and the associated security scheme descriptor file to the target secure element.

According to one embodiment, the first set of at least one parameter corresponds to a universally unique identifier UUID_L indentifying the locker of the device.

According to one embodiment, the second set of at least one parameter comprises a universally unique identifier UUID_G indentifying a business owner.

According to one embodiment, the second set of at least one parameter comprises a universally unique identifier UUID_R indentifying an image owner.

According to one embodiment, the operation code is adapted to code a requested operation from a group of at least two operations codes.

According to one embodiment, one of the operation code OP corresponds to an operation for a business owner to grant the rights to an image owner for conditionally loading an image into the secure element.

According to one embodiment, the operation code OP corresponds to the operation of locking an unlocked target secure element, the execution of this operation implying to set UUID_L value of the first set of parameter to a UUID_G value transmitted with the second set of parameter.

According to one embodiment, the operation code OP corresponds to the operation of unlocking a target secure element.

According to one embodiment, the operation code OP corresponds to the operation deleting at least a portion of data memorised by the target secure element.

According to one embodiment, the operation code OP corresponds to the operation of transferring the rights of a first business owner to a second business owner.

The invention also related to an image delivery server configured to implement the method described above.

The invention also related to an image delivery server comprising a first and a second hardware security module, adapted to control remotely the rights of a target secure element to execute an operation, configured to load a profile image and to store a first set of at least one parameter indicating if the secure element is locked or unlocked and, in case it is locked, who is the locker of said secure device, the image delivery server, being configured to:
- receive by the first hardware security module a second set of at least one parameter and an operation code OP defining a requested operation for changing the rights attributed to a target secure element, said second set of at least one parameter being adapted for controlling the rights to execute the requested operation by the target secure element depending of the result of a comparison between said first and second set of parameters;
- receive a profile image to be transmitted to the secure element;
- send by the first hardware security module to the second hardware security module the second set of parameters, the operation code OP and a signature generated by the second hardware security module using as an input the second set of parameters and the operation code OP, said signature identifying the first hardware security manager as the sender;
- generate a security scheme descriptor which is an encrypted file binding the profile image with the target secure element and comprising the second set of at least one parameter, the operation code OP and their associated signature, said file being decryptable by the target secure element;
- send the received image profile and the associated security scheme descriptor file to the targeted secure element.

According to one embodiment, the image delivery server is further configured to:
- receive by the first hardware security module at least one credential uniquely associated to the secure element;
- verify by the first hardware security module the authenticity of the at least one received credential.

The invention also relates to a secure element configured to receive from an image delivery server an image profile and an associated security scheme descriptor associated to said image profile and further configured to execute a requested operation OP transmitted with the associated security scheme descriptor depending of the result of a comparison between the first and second set of parameters.

The invention also related to a computer program for instructing a computer to perform the method described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 illustrates schematically the principle of a Primary Boot Loader and of a Profile Image;
- Figure 2 is provides a schematic representation of a PBL based telecommunications system;
- Figure 3 is an example of diagram providing rules for a secure element to check if it has to apply a command received from an Image Delivery Server;
- Figure 4 illustrates schematically how an image delivery server prepares and sends a profile image associated with a request for changing/granting the rights associated to a target secure element;
- Figure 5 illustrates an example of data flow between the secure element and the IDS server.

### DETAILED DESCRIPTION

Herein under is considered a case in which the invention is supported by an Image Delivery Server (IDS) and an embedded secure element cooperating with an OEM device such as a Smartphone. However, it is only for exemplifying purposes and is not considered to reduce the scope of the present invention. The skilled person will understand that the invention is applicable, for example, to an Image Delivery Server and an embedded secure element cooperating with a machine-to-machine (M2M) device. More generally, the invention is applicable to any embedded/removable secure element which can be located into any kind of devices, a chip within a body card or a passport for example.

While the subject invention will now be described in detail with reference to the figures, it is done so in connection with the illustrative embodiments. It is intended that changes and modifications can be made to the described embodiments without departing from the true scope and spirit of the subject invention as defined by the appended claims.

In the following description, numerous specific details are set forth. However, it is understood that embodiments may be practiced without these specific details. In other instances, well known circuits, structures and techniques have not been show in detail in order not to obscure the understanding of the description.

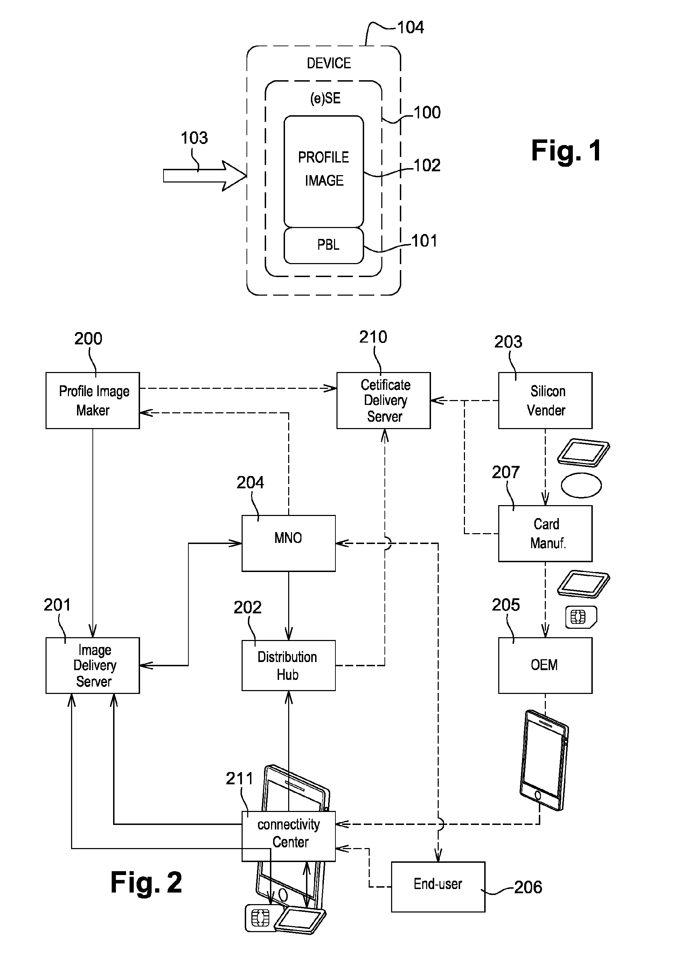

**Figure 1** illustrates schematically the principle of a Primary Boot Loader and of a Profile Image. The PBL solution behaves just like a card connector with a full card image (OS), called Profile Image (OS and Custom data), and loaded on an eSE chip 100.

This chip 100, which can be an embedded secure element (eSE) or a removable secure element (SE), is loaded at manufacturing with a secured firmware 101 called Primary Boot Loader (PBL).

The Profile Image 102 is securely downloaded through an IP/high-speed channel 103 and comprises for example the OS, OS customization including native code, the required algorithms and the profile personalization elements, including keys and applications.

In other terms, the Profile Image regroups as a bundle the following items: OS (including all customs and algorithms), applications, and the provisioning or operational profile parameters.

The one or several applications comprised in the profile can be for example:
- implementation of 3GPP requirements (3rd Generation Partnership Project),
- any MNO-specific mechanism (including the Network Authentication algorithms),
- features such as Digital Payment, Mobile Marketing, Transport, QoE, Mobile ID, Social Networks, back-up of End User data on the Cloud,
- any qualified third parties application.

The Profile Image is fully downloadable on a dedicated chip, which can be either on a soldered or removable packaging, provided that it has been certified. This requires a chip certification to be executed.

**Figure 2** provides a schematic representation of a PBL based telecommunications system.

This telecommunications system comprises a Profile Business owner 200 adapted to generate Profile Images (PI). These PI that can be designed, specified and validated in collaboration with an MNO (or an MVNO).

In order to ease the understanding of the role of the multiple actors involved in the ecosystem, the following definitions can be used:
- Business Owner: it is the one that has the lock of an eSE and which can grant rights to an Image Owner;
- Image Owner: it is the one selecting the OS and custom data/application of the full image profile. The Image owner purchases the Full Image Profile to an Image maker and is in charge of the business relationships to the user and the service providers. An Image Owner can be a Business Owner;

- Image Maker: it is the one building the full image profile (batch mode). The full image profile is encrypted with a set of ephemeral transport keys. The Image Maker receives the Input Files from the Image Owner and returns the Output Files to same Image Owner;
- Image Delivery Server: it is the server in charge to bind a full image profile and an eSE in generating the means for the eSE to access the ephemeral transport keys of the full image profile.

The Image owner 200 receives for example the input files provided by the legacy Operational Support System (OSS) / Business Support System (BSS) of the MNO and turns into a Profile Image. These Input Files can be generated in advance as in happens in the current process. Every image is encrypted with ephemeral transport keys. Images are sent by batches to the Image Delivery Server. The Image Maker generates the corresponding output files, in full compliancy with the IT systems currently in use by the MNO.

An Image Delivery Server 201, also designated with the acronym IDS, is required to process a packaged Profile Image and bundle / download it to the proper and unique destination UICC compatible chip deployed on the field.

The IDS binds Profile Images and an embedded/removable secure element associated to the same Part Numbers. A security scheme associated to a security architecture drives all operations. The IDS stores a repository of Profile Images, monitors and reports all operations for informing all involved actors.

Profile Images are received encrypted from the Image maker to a given IDS and exposes three parts:
- A manifest: describing the structure and the credentials related to the next parts. The manifest can be based on an XML meta-language. This part is not encrypted;
- A small encrypted file named SSD (Security Scheme Descriptor). This part is encrypted by a ephemeral transport key and contains all segment descriptors (location, size, decrypting key, integrity check);
- A binary file containing the encrypted segments of memory to load into the SE. This part is never decrypted by IDS;
- A certificated issued by the business owner for delegation;
- A certificated issued by the image owner for authentication.

The IDS can be operated by one of the following actors:
- The Business Owner,
- The OEM device maker,
- The Image Owner.

The IDS acts as the Image Logistician of the ecosystem. The Image Owner plays the role of services aggregator by contracting business agreement with service providers (SP).

A Service Provider (SP) as the MNO 204 plays their traditional role of connectivity provider, who provides access capability and communication services to its End Users through a mobile network infrastructure.

The Silicon Vendor 203 produces SE Chips. These chips will have to comply to a set of requirements making them compatible with the download of Profile Images and their installation into the chip thanks to the PBL loader. They will therefore have to be certified accordingly. The Silicon vendor will initialize the SE chip by loading the PBL firmware and the associated certified credentials.

The OEM 205 manufactures Consumer OEM Devices with communication capabilities for End Users 206.

A certificate Issuer 210 ensures the confidence of cross communications between all actors of the ecosystem.

A possible journey within our ecosystem can be illustrated as follow:
- The user selects the features of her application (e.g. the subscription of the MNO application) directly with an employee of a shop or from a portal of virtual store. The shop employee or the virtual store returns an activation code to the user.
- The user enters the activation code via an application named Connectivity Center into the OEM device.
- The OEM device connects the IDS with the activation code as a parameter.
- The SE via the Connectivity Center transfers its credentials to the I DS.
- The IDS matches the activation code and the user's record containing the profile of the image to select.
- The IDS extracts a full image profile related to the user's selection.
- The IDS reads the image profile manifest and extracts the SSD.
- The IDS computes, thanks an HSM, an ephemeral key KS3 and additional credentials (AC) from the SE credentials and from a certificate (CD) extracted from the manifest.
- The IDS transfers the SSD, AC and KS3 to an HSM which deduces the SSD transport key, decrypts the SSD, add the (AC) additional credentials and encrypt all previous data with KS3 then prefix the all with a header (H).
- The IDS inserts the new SSD into the full image profile which from now on ready for a download from the OEM device.
- The OEM device downloads the full image profile from the IDS.
- The full image profile manifest leads the Connectivity Center for loading the SSD and the binary file, segment after segment, into the secure element.

Profile Image design, validation and generation is handled by the Image maker from requirements of the Image Owner. Ordering process is still based on Image Owner sending Input Files (IF). Based on the IF, the Image maker 200 generates the Profile Images, stores them in the appropriate DB/repository, and sends back the Output Files to the image Owner 204.

The hardware supply chain is handled in two possible flows.

In a first possible flow, the secure element, manufactured by the Silicon Vendor 203, duly certified, and with PBL and key(s) on-board, is provided directly to the OEM 205 then receives the first Profile Image based on the process above.

In a second possible flow, the secure element is sourced by the Card Manufacturer 207), who loads an initial Profile Image that will be either delivered:
- to the OEM 205;
- or to the OEM 205 via the Image Owner 204;
- or to the Image Owner 204.

All the model's components such as Profile Image or secure elements are certified before being made available.

Such certification is performed prior to any possible use. The binding of a Profile Image with a secure element is, instead, a real-time operation.

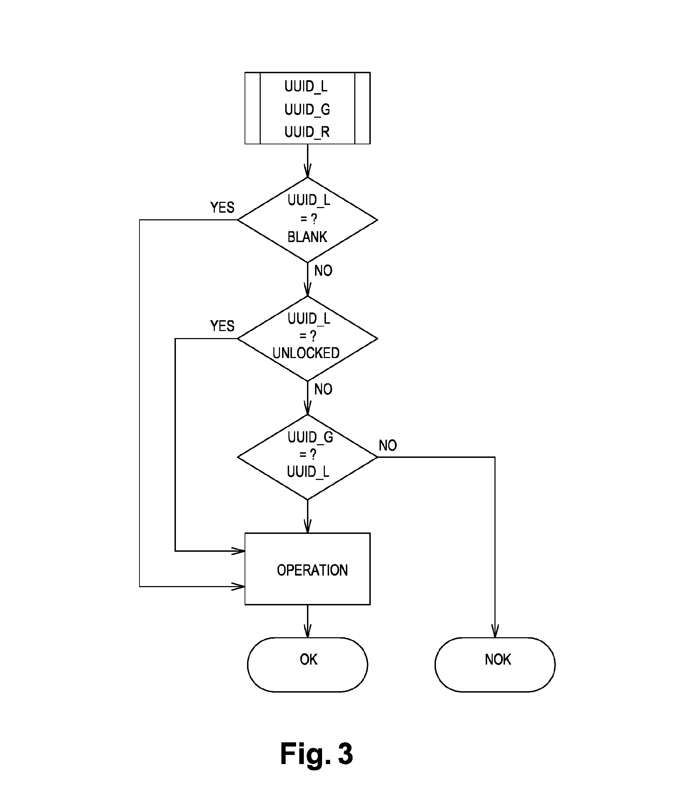

**Figure 3** is an example of diagram providing rules for a secure element to check if it has to apply a command received from an Image Delivery Server.

In this description, a business owner designates an organisation that has the right to control a secure element by allowing operations, for example by locking it, unlocking it, and allowing it to load a Profile Image or other types of operation. As an example, a Service Provider is an MNO having a business agreement with an Image Owner. A business Owner subsidizes a plurality of user OEM devices. The Business Owner grants the permission rights of operations to the Image Owner.

An image owner designates an organisation to which the right to control a secure element, at least partially, has been delegated by a business owner.

According to this invention, there is proposed a method for controlling the right to perform operations into a secure element (embedded or removable) or the equivalent trusted execution environment operating within a System on Chip.

For example, a service provider is an MNO A, an Image Owner is an MNO B, a Business Owner is an MNO C which has subsidized the device purchased by the end-user. The delegation of rights, that is to say the remote control of rights and permissions of a target secure element, can be implemented using the some of the following operations (not limited):
- loading an image of the code running into a secure element and containing the essential credentials for granting the access to a service such as the mobile communication. The secure element or the equivalent function is embedded in a portable/wearable device which may be subsidized by business owner.
- locking a blank secure element; according to one embodiment, this can be done only one time;
- unlocking a secure element from a business owner or from a delegation; according to one embodiment, this can be done only one time;
- transferring the business owner rights to a third party that will becomes the new business owner of the secure element;
- deleting the session means for reloading an Image Profile previously loaded. Then the secure element will definitively be not able to reload the Image Profile.

The proposed method can use three identifiers, one for the business owner, one for the image owner and one for the secure element.

In one embodiment, these identifiers are universally unique identifiers (UUID) type 3 such as defined in the request for comments RFC4122.

For example, the business owner (the giver) is dully identified by its UUID_G, the image owner (the receiver) is dully identified by its UUID_R and the secure element the Secure Element stores a given UUID namely the locker UUID_L.

A Profile Image is transmitted to the secure element together with a file called security scheme descriptor (SSD). In one embodiment, the SSD file comprises two operands and an operation code:
- UUID_G which is the first operand as a UUID and identifies the business owner;
- UUID_R which is the second operand as an UUID and identifies the image owner;
- OP which is the operation code.

The operation code is a message to be read by the secure element when receiving the Profile Image which indicates which operation is requested to the target secure element. This operation code can take for example five binary values corresponding for example to:
- Loading: in that case, a business owner grants the rights to an image owner for conditionally loading an image into the secure element;
- Locking: this operation can be used when the secure element is blank or unlocked. This operation code allows the set UUID_L to a UUID_G value.
- Unlocking: this operation code can be used when the secure element is locked or blank then it will switch to unlocked. This state can be persistent and irreversible
- Deleting: this command can be used when the secure element contains persistent data related to the prior loading session. The operation allows erasing the data related to a given session and preventing future tentative for reloading the session related image into the chip;
- Transferring: this command can be used for a business owner to transfer its rights to another business owner. The operation performs the following transfer UUID_L = UUID_R.

The secure element can accept an operation from an image owner if UUID_R is the same than the UUID_L.

Further, the secure element can accept an operation from any business owners if no UUID_L is present in the secure element. This can be the case for example if the secure element is blank. A blank secure element can store a UUID_L with a predefined value such as UUID_L = FFFFFFFF-FFFF-FFFF-FFFF-FFFFFFFFFFFF.

This can also be the case if the secure element is unlocked, the UUID_L stored in the secure element being equal to a predefined value, for example UUID_L= 00000000-0000-0000-0000-000000000000.

In another embodiment, the secure element can accept an operation from any business owners if the image contains the locker UUID_L and the evidence (a certificate or equivalent) which can be checked by the secure element before the operation.

According to one aspect of the invention, the server generating the image is able to check a pre-negotiated certificate from the business owner (the giver) for binding the said Profile Image with a secure element. The image owner (the receiver) brings with the image to bind, a certificate for given profile of images, a limited time and a given part number granting the binding and then checkable by the secure element.

The table below summarize the rules that can be applied by the secure element to determine whether or not the operation corresponding to the operation code should be allowed and therefore executed or rejected.

**Table 1: rules to allow or reject an operation requested by the IDS to a target secure element**

| **UUID_{L}** | **UUID_{G}** | **UUID_{R}** | **Operation** |
|---|---|---|---|
| BLANK/UNLOCKED | ANY | ANY | Allowed |
| XXX | XXX | ANY | Allowed |
| XXX | YYY | ANY | Rejected |

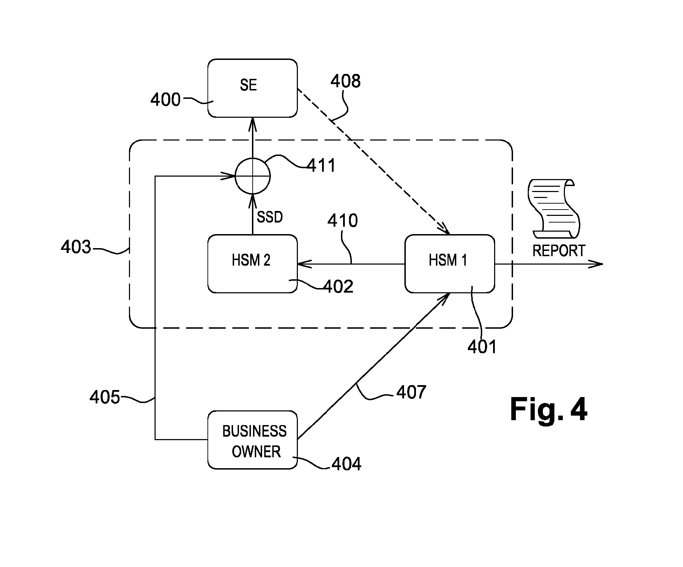

**Figure 4** illustrates schematically how an image delivery server prepares and sends a profile image associated with a request for changing the rights associated to a target secure element.

According to one aspect of the invention, the image delivery server 403 comprises two hardware security servers 401, 402, a first one designated as HSM1 and a second one designated as HSM2. However, alternative architectures of the IDS can also be considered for this invention.

In this example, the HSM1 401 of the IDS 403 receives:
- the SE credentials containing the parameter UUID_L,
- the certificate from the business owner containing the parameters UUID_R and UUID_G as well as an operation code OP;
- the certificate from the image owner detailing the image profile and UUID_R.

The HSM (Hardware Security Module) 1 401 checks all certificates, checks the conditions of the delegations and computes an ephemeral key KS3 and a signature on the parameters UUID_R, UUID_G, the operation code OP. As an example, the electronic signature can be a keyed-hash message authentication code (HMAC). The parameters UUID_R, UUID_G, the operation code OP and a signature on these parameters and the ephemeral key KS3 and the means for the secure element to securely deduce KS3 are securely transferred to a second HSM2 402.

In an alternative embodiment, UUID_G and OP are transmitted to the IDS 403, without the need to transfer UUID_G. This can be the case if no transfer of right from the business owner identified by UUID_G is requested or need. For a transfer of right to another image owner, the identifier on this image owner UUID_R should be sent together with a UUID_G for the target secure element to be later in position to apply this change of rights.

In an alternative embodiment, UUID_G is equal to UUID_R informing about a self delegation or transfer of rights from a business owner to itself.

The second hardware security manager HSM2 402 then generates a security scheme descriptor (SSD) which is an encrypted file binding the Profile Image with the target secure element. An essential aspect of the invention is that this file comprises the parameters and the operation code defining the request for changing the rights associated to a target secure element. The SSD file is generated such that is can be decrypted by the target secure element only.

The security scheme descriptor (SSD) encrypted with an ephemeral transport key and the means for deducing the said ephemeral transport key are extracted from the image profile thanks some information in the manifest file, is transmitted to the HSM 2 402. The HSM 2 performs the following operations:
- Deduce the ephemeral transport key;
- Decrypt the SSD;
- Append to the SSD the parameters UUID_R ,UUID_G, the operation code OP, and their signature;
- Encrypt the SSD with KS3 the ephemeral key generated by HSM1;
- Append to the SSD the means for the secure element to securely deduce KS3.

Once received by the secure element 400, the SSD file is decrypted by using the deduced ephemeral key KS3. The execution of the operation defined by OP is allowed or rejected by applying the rules of the Table 1 with the parameter UUID_R, UUID_G from the SSD and UUID_L from the secure element.

The aforementioned rights attributed to a secure element are for example related to the loading of Profile Images. However, the invention is not restricted to the loading of an Image Profile. For example, the rights attributed and/or modified thanks to the mechanism proposed by the invention are for example rights allowing or restricting any kind of software modification on the secure element and/or on the device.

If the operation requested by the business owner is a delegation of right, that is to say a transfer of right to another image owner, thanks to the invention the Image Delivery Server 403 can report to the initial owner the number delegations of rights which have been granted to a new owner.

The IDS cannot accurately count the number of delegations in a distributed model where multiple IDS may operate on the behalf of the business owner; consequently a periodic report may constraint a business owner to perform a self control of the usage of the said certificate according to a contract.

The image owner negotiates with the business owner the delegation for one or several criteria among which:
- a given part number,
- a given number of images,
- a limited time,
- any other criteria useful to define the delegation.

Advantageously, the delegation supports the real-time constraints related to the instant generation of an image and its downloading into a device thanks an agnostic communication channel.

Another advantage is that the operations related to this delegation require a low power of computation in the secure element and in the HSM.

Additionally, the delegation supports a pre-negotiation of the terms of the granting between the business owner and the image owner. This advantage may avoid time consuming data exchanges between the IDS generating the bounded image profile and the business owner server.

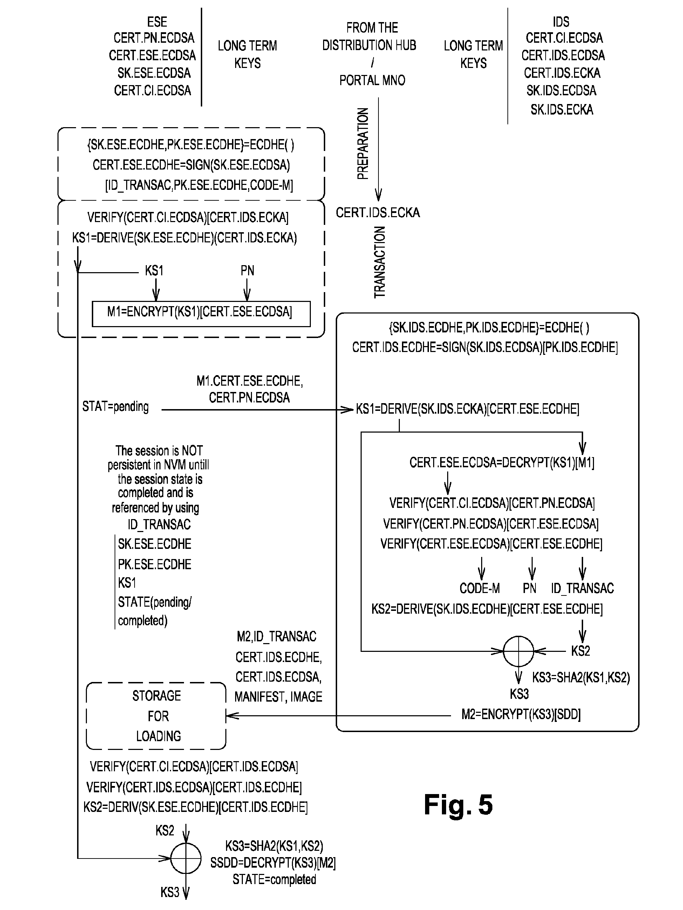

**Figure 5** illustrates an example of data flow between the secure element and the IDS server.

It is assumed hereafter that all static keys are in the same ECC domain.

The ESE embeds the following long term credentials:
- CERT.PN.ECDSA : The certificate of the PN signed by the CI
- CERT.ESE.ECDSA : The certificate of the secure element signed by its silicon maker
- CERT.CI.ECDSA : The certificate of the Certificate Issuer
- SK.ESE.ECDSA : The private key of the ESE.
The IDS 201 embeds the following long term credentials:
- CERT.CI.ECDSA : The certificate of the Certificate Issuer
- CERT.PN.ECDSA : The certificate of the PN signed by the CI CERT.IDS.ECDSA : The certificate of the IDS for signature signed by the CI (Certificate Issuer)
- CERT.IDS.ECDSA : The certificate of the IDS for key agreement signed by the CI (Certificate Issuer)
- SK.IDS.ECDSA : The private key of the IDS for signature.
- SK.IDS.ECKA : The private key of the IDS for key agreement.

### Preparation of the ESE credentials

- The ESE verifies CERT.IDS.ECKA by using CERT.CI.ECDSA
- The ESE generate an ephemeral couple of Diffie-Hellman keys as SK.ESE.ECDHE and PK.ESE.ECDHE which are respectively the private (SK) and the public (PK) key.
- The ESE signs a certificate CERT.ESE.ECDHE containing a code CODE-M (activation code sent by Image Owner), a transaction identifier (ID_TRANSAC) and the PK.ESE.ECDHE The ESE verifies the certificate CERT.IDS.ECKA by using CERT.CI.ECDSA
- The ESE computes the session key KS1 by deriving SK.ESE.ECDHE and CERT.IDS.ECKA
- The certificate of the ESE as CERT.ESE.ECDSA is encrypted by using KS1. The said certificate contains PN which is the Part Number of the ESE. M1 and CERT.ESE.ECDHE, CERT.PN.ECDSA are the credentials which may be used for getting a new image from the IDS.

### Computation in the IDS

- The ESE credentials are gathered by the IDS via any means (e.g. a MNO portal).
- KS1 is deduced by using SK.IDS.ECKA and CERT.ESE.ECDHE.
- The ESE certificate CERT.ESE.ECDSA is decrypted from M1 by using KS1.
- CERT.PN.ECDSA is verified by using CERT.CI.ECDSA
- The ESE certificate CERT.ESE.ECDSA is verified by using CERT.PN.ECDSA
- The IDS computes an ephemeral Diffie-Hellman keys pair as PK.IDS.ECDHE and SK.IDS.ECDHE
- The IDS computes a certificate CERT.IDS.ECDHE which includes ID_TRANSAC by using SK.IDS.ECDSA
- The IDS computes a session key KS2 by using SK.IDS.ECDSA and CERT.ESE.ECDHE
- The IDS derives the key KS1 by KS2 for getting KS3 (Perfect Forward Secrecy): KS3 = SHA2(KS1 ,KS3)
- UUID_G, UUID_R and OP are append to the SSD
- The signature H_UUID = HMAC of UUID_G, UUID_R and OP by using KS2 is appended to the SSD
- The IDS can encrypt the SSD (Security Scheme Descriptor) by using KS3 and gets M2.
- A MANIFEST, CERT.IDS.ECDHE, CERT.IDS.ECDSA, M2 and the IMAGE can be transferred to the eSE via an URL from a server or any other means.

### Computation in the eSE

- The eSE gets from the IDS: M2, CERT.IDS.ECDHE and CERT.IDS.ECDSA
- The eSE verifies both certificates from CERT.CI.ECDSA (root certificate).
- The eSE computes KS2 by using PK.IDS.ECDHE, SK.ESE.ECDSA
- The eSE derives KS3 from KS2 and KS1
- The eSE decrypts the SSD by using KS3.
- The eSE checks the signature H_UUID by using KS2

### Structure of the SSD

The IDS runs two HSM in order to separate the liability and enforce a security policy where:
- HSM1: in charge to generate the KS3 ephemeral key, CERT.IDS.ECDHE and the integrity check H_UUID of the pair UUID_G and UUID_R by checking the certificate for delegation from the Business Owner and the certificate of the Image owner associated to the image profile; HSM1 is shared by all ESE makers
- HSM2: in charge to generate M2 as the encryption of the SSD by using KS3. HSM2 is shared by all Image Owners

The integrity check H_UUID generates by the HSM1 cannot be changed by HSM2 and the integrity of the couple UUID_G and UUID_R is checkable by the eSE.

The H_UUID is provided as the HMAC of the pair UUID_G, OP (Operation Code) and UUID_R by KS2. KS2 is not provided to HSM2 then this last one cannot forge a new H_UUID.

## Claims

1. A method for controlling remotely the rights of a target secure element to an execute an operation, said target secure element (400) being configured to load a profile image and to store a first set of at least one parameter indicating if the secure element is locked or unlocked and, in case it is locked, who is the locker of said secure device, the method being operated by an image delivery server (403), said method comprising the following steps:
- receiving a second set (407) of at least one parameter and an operation code OP defining a requested operation to be performed by the target secure element (400), said second set of at least one parameter being adapted for controlling the rights to execute the requested operation by the target secure element depending on the result of a comparison between said first and second sets of parameters;
- receiving a profile image (405) to be transmitted to the secure element (400);
- generating a security scheme descriptor (SSD) file adapted to bind the profile image with the target secure element and further comprising the second set of at least one parameter and the operation code OP;
- sending the received image profile and the associated security scheme descriptor (SSD) file to the target secure element (400).

2. Method according to claim 1, wherein the first set of at least one parameter corresponds to a universally unique identifier UUID_L indentifying the locker of the device.

3. Method according to any of the preceding claims, wherein the second set (407) of at least one parameter comprises a universally unique identifier UUID_G indentifying a business owner.

4. Method according to any of the preceding claims, wherein the second set (407) of at least one parameter comprises a universally unique identifier UUID_R indentifying an image owner.

5. Method according to any of the previous claims, wherein the operation code is adapted to code a requested operation from a group of at least two operations codes.

6. Method according to claim 5, wherein one of the operation code OP corresponds to an operation for a business owner to grant the rights to an image owner for conditionally loading an image into the secure element.

7. Method according to claim 5, wherein one of the operation code OP corresponds to the operation of locking an unlocked target secure element, the execution of this operation implying to set UUID_L value of the first set of parameter to a UUID_G value transmitted with the second set of parameter.

8. Method according to claim 5, wherein one of the operation code OP corresponds to the operation of unlocking a target secure element.

9. Method according to claim 5, wherein one of the operation code OP corresponds to the operation deleting at least a portion of data memorised by the target secure element.

10. Method according to claim 5, wherein one of the operation code OP corresponds to the operation of transferring the rights of a first business owner to a second business owner.

11. An image delivery server (403) configured to implement the method according to any of the preceding claims.

12. An image delivery server (403) comprising a first (401) and a second (402) hardware security module, adapted to control remotely the rights of a target secure element (400) to execute an operation, configured to load a profile image and to store a first set of at least one parameter indicating if the secure element is locked or unlocked and, in case it is locked, who is the locker of said secure device, the image delivery server (403), being configured to:
- receive by the first hardware security module (401) a second set (407) of at least one parameter and an operation code OP defining a requested operation for changing the rights attributed to a target secure element (400), said second set of at least one parameter being adapted for controlling the rights to execute the requested operation by the target secure element (400) depending of the result of a comparison between said first and second set of parameters;
- receive a profile image (405) to be transmitted to the secure element (400);
- send by the first hardware security module (401) to the second hardware security module (402) the second set of parameters, the operation code OP and a signature generated by the second hardware security module using as an input the second set of parameters and the operation code OP, said signature identifying the first hardware security manager (401) as the sender;
- generate a security scheme descriptor (SSD) which is an element and comprising the second set of at least one parameter, the operation code OP and their associated signature, said file being decryptable by the target secure element;
- send the received image profile and the associated security scheme descriptor (SSD) file to the targeted secure element (400).

13. An image delivery server according to claim 12 further configured to:
- receive by the first hardware security module (401) at least one credential (408) uniquely associated to the secure element (400); verify by the first hardware security module (401) the authenticity of the at least one received credential.

14. A secure element (400) configured to receive from an image delivery server (403) according to claim 13 or 14 an image profile and an associated security scheme descriptor associated to said image profile and further configured to execute a requested operation OP transmitted with the associated security scheme descriptor depending of the result of a comparison between the first and second set of parameters.

15. A computer program for instructing a computer to perform the method according to any of claims 1 to 10.
